# EUROPÄISCHE PATENTSCHRIFT

(11) **EP 4 015 848 B1**
(45) Veröffentlichungstag und Bekanntmachung des Hinweises auf die Patenterteilung: **14.02.2024**
(21) Anmeldenummer: 21209994.9
(22) Anmeldetag: 23.11.2021
(51) Int. Cl.: E05F 15/689, F16C 1/08, E05F 11/48

(54) **SEILANTRIEBSVORRICHTUNG EINES KRAFTFAHRZEUGS**
CABLE DRIVE DEVICE OF A MOTOR VEHICLE
DISPOSITIF D'ENTRAÎNEMENT PAR CÂBLE D'UN VÉHICULE AUTOMOBILE

(30) Priorität: 16.12.2020 DE 102020216070
(43) Veröffentlichungstag der Anmeldung: 22.06.2022
(73) Patentinhaber: Brose Fahrzeugteile SE & Co. Kommanditgesellschaft, Bamberg, 96052 Bamberg (DE)
(72) Erfinder: KRIEGER, Thomas, 96149 Breitengüßbach (DE); LICKO, Lubos, 97213 Nitrianske Pravno (SK); TAUBMANN, Udo, 96476 Bad Rodach-Sülzfeld (DE); WENDRICH, Michael, 96450 Coburg (DE)
(74) Vertreter: FDST Patentanwälte

(56) Entgegenhaltungen:
- DE-U1-202005 008 888
- KR-B1- 101 991 780
- US-A1- 2010 043 294
- US-A1- 2013 133 265
- US-B2- 10 626 962

## Beschreibung

Die Erfindung betrifft eine Seilantriebsvorrichtung eines Verstellsystems, insbesondere eines Fensterhebers oder einer Fensterheberbaugruppe, eines Kraftfahrzeugs, mit einem Stellantrieb und mit einem Seilantriebsgehäuse sowie mit einer darin um eine Drehachse drehbar aufgenommenen Seiltrommel, auf welche ein Zugseil aufgespult oder aufspulbar ist. Sie betrifft weiter einen Fensterheber (eine Fensterheberbaugruppe) als Verstellsystem mit einer solchen Seilantriebsvorrichtung sowie eine Seiltrommel für eine derartige Seilantriebsvorrichtung.

Bewegbare Fahrzeugfensterscheiben werden typischerweise durch elektrisch oder elektromotorisch betriebene Stell- oder Seilantriebsvorrichtungen eines Fahrzeug-Fensterhebers zwischen einer Schließstellung und einer Offenstellung verfahren. Ein solcher Fensterheber umfasst einen (elektrischen) Stellmotor als Seil- oder Stellantrieb sowie eine den Stellantrieb mit der Fensterscheibe verbindende, dies bedeutet kraftübertragungstechnisch koppelnde Stellmechanik, welche einer Kraftfahrzeugtür oder einer Kraftfahrzeugkarosserie zugeordnet ist. Hierzu ist mindestens ein an einer Führungsschiene verschiebebeweglich geführter Mitnehmer oder Schienengleiter mit Mitnehmerfunktion an die zu bewegende Fensterscheibe mechanisch angebunden.

Um den jeweiligen Schienengleiter entlang der Führungsschiene und die Fensterscheibe entlang des Verstellweges zwischen der Schließstellung und der Offenstellung zu bewegen ist typischerweise ein flexibles Zugmittel, zum Beispiel in Form eines Bowdenzugs (einer Bowdenhülle mit Innenzug) oder eines zughüllenlosen (bowdenlosen) Zugseils vorgesehen, welches mit dem Seil- oder Stellantrieb verbunden und von mit diesem angetrieben ist.

Zur Führung des Zugseils entlang der Führungsschiene sind Umlenkelemente, beispielsweise Umlenkrollen, des Fensterhebers vorgesehen, welche ebenso wie die jeweilige Führungsschiene und der Seil- oder Stellantrieb auf einem auch als Aggregatträger bezeichneten Türmodul in Form einer Türinnenplatte angeordnet bzw. an dieser befestigt ist. Fensterheber mit derartigen Seilzug-Mechaniken werden auch als Seilzugfensterheber bezeichnet.

Die Seilantriebsvorrichtung des Fensterhebers umfasst in der Regel eine vom Seil- oder Stellantrieb rotatorisch angetriebene Seiltrommel, die vom Zugseil umschlungen ist und hierzu eine helixförmige oder schraubenartige Seilrille (Seilnut) aufweist, in welcher das Zugseil als Seilschlaufe mit typischerweise mehreren axial beabstandeten Windungen einliegt. In Folge einer Drehbewegung der Seiltrommel wird das Zugseil mit einem Seilabschnitt (Seilende) auf die Seiltrommel aufgewickelt und mit dem anderen Seilabschnitt (Seilende) von der Seiltrommel abgewickelt. Dadurch verschiebt sich die vom Zugseil gebildete Seilschlaufe, was wiederum zu einer Bewegung des Schienengleiters entlang der Führungsschiene und somit zu einer Verstellung der Fensterscheibe zwischen der Schließstellung und der Offenstellung führt.

Bei einer aus der DE 20 2006 001 054 U1 bekannten Antriebseinrichtung für einen Seilfensterheber mit selbsttätigem Seillängenausgleich und mit einem über Umlenkrollen in einer geschlossenen Seilschlaufe geführten sowie mittels einer Seiltrommel angetriebenen Zugseils sind dessen Seilschlaufenenden in Nippelkammern (Seilnippel-Kammern) eingehängt. In die Nippelkammern, die sich an den gegenüberliegenden Stirnseiten der zylinderförmigen Seiltrommel in einem radial äußeren Seiten- oder Trommelbereich befinden, mündet die schraubenartige Seilrille mit einem einlaufenden bzw. auslaufenden Rillenende (stirnseitigen Nutabschnitt) ein.

Bei der Montage des Zugseils an oder auf der Seiltrommel wird zunächst eines der Seil- oder Seilschlaufenenden, das mit einem Seilnippel versehen ist, in eine der Nippelkammern eingelegt. Hierbei können Montagefehler auftreten, indem der in die Nippelkammer eingelegte Seilnippel aus der Nippelkammer herausgleitet, insbesondere wenn der Seilnippel noch nicht in dessen Soll-Position in der Nippelkammer geführt worden ist. Eine solche Situation tritt im Zuge der Seilmontage insbesondere dann auf, wenn die Nippelkammer größer ist als die Länge des Seilnippels in Seillängsrichtung. Auch aus diesem Grund ist bislang ein automatisiertes Einsetzen des Seilnippels in die trommelseitige Nippelkammer schwierig.

US 2010/043294 A1 offenbart eine Seilantriebsvorrichtung gemäß dem Oberbegriff des Anspruchs 1.

Der Erfindung liegt die Aufgabe zugrunde, eine geeignete Seilantriebsvorrichtung anzugeben, bei der eine zuverlässige Montage des Zugseils auf bzw. an der Seiltrommel und insbesondere ein zuverlässiges Einsetzen des Seilnippels in die jeweilige Nippelkammer der Seiltrommel ermöglicht ist. Insbesondere sollen Montagefehler beim Einsetzen (Einlegen) des Seilnippels des Zugseils in die entsprechende Nippelkammer der Seiltrommel vermieden werden. Des Weiteren soll eine besonders geeignete Seiltrommel für eine solche Seilantriebsvorrichtung angegeben werden. Zudem soll ein Fensterheber (eine Fensterheberbaugruppe) mit einer derartigen Seilantriebsvorrichtung angegeben werden.

Diese Aufgabe wird bezüglich der Seilantriebsvorrichtung mit den Merkmalen des Anspruchs 1 und hinsichtlich des Fensterhebers als bevorzugte Verstelleinrichtung eines Kraftfahrzeugs mit den Merkmalen des Anspruchs 8 erfindungsgemäß gelöst. Vorteilhafte Ausgestaltungen und Weiterbildungen sind Gegenstand der Unteransprüche.

Die Seilantriebsvorrichtung weist einen, vorzugsweise elektromotorischen, Seiloder Stellantrieb und ein Seilantriebsgehäuse auf, in welches eine mit dem Stellantrieb gekoppelte oder koppelbare Seiltrommel um eine Drehachse drehbar aufgenommen ist, auf welche ein Zugseil aufgespult oder aufspulbar ist.

Der Stellantrieb weist geeigneter Weise einen, beispielsweise bürstenbehafteten, Elektromotor auf, der vorzugsweise antriebstechnisch mit einem Untersetzungsgetriebe gekoppelt ist. Zweckmäßigerweise ist dies ein Schneckengetriebe mit einer mit der Motorwelle drehfesten Schnecke, die mit einem Schneckenrad kämmt, das mit einem mit der Seiltrommel, vorzugsweise formschlüssig, gefügten Drehzapfen verbunden oder gekoppelt ist. Hierzu weist die Seiltrommel vorzugsweise eine zentrale Aufnahmeöffnung mit einer Fügekontur, insbesondere einer Innenverzahnung, zur Herstellung einer, geeigneter Weise formschlüssigen, Fügeverbindung mit einer Gegenkontur, insbesondere einer Außenverzahnung, des Drehzapfens des Stellantriebs bzw. dessen Schneckenrades (Getrieberades) auf.

Die Seiltrommel ist von einem Zugseil, insbesondere unter Bildung eines einlaufenden und eines auslaufenden Seilabschnitts (Seilendes), umschlungen oder umschlingbar. Hierzu weist die, vorzugsweise zylindrische, Seiltrommel einen Trommelmantel mit einer helixartigen oder schraubenförmigen Seilnut zur Aufnahme des Zugseils bzw. einer Seilschlaufe des Zugseils auf. Im Montagezustand ist das Zugseil auf die Seiltrommel aufgespult und liegt dabei in der mantelseitigen Seilnut ein. An zumindest einer Stirnseite oder stirnseitigen Kreisfläche der Seiltrommel weist diese eine Nippelkammer auf, welche über einen nachfolgend auch als (einlaufendes) Rillenende bezeichneten stirnseitigen Nutabschnitt in die umfangsseitige Seilnut der Seiltrommel übergeht bzw. in welche ein solches Rillenende der Seilnut einmündet.

Die Nippelkammer dient zur Aufnahme eines am Zugseil endseitig angeordneten, insbesondere klemmbefestigten, Seilnippels. Vorzugsweise ist am Übergang der Seilnut bzw. des Rillenendes in die Nippelkammer eine trommelseitige Hintergriffkontur, insbesondere nach Art eines Hinterschnitts, vorgesehen, den der Seilnippel im Montagezustand mit einem Nippelabschnitt unter- bzw. hintergreift. Dadurch ist der Seilnippel, insbesondere aufgrund der im Montagezustand wirkenden Zugkräfte im bzw. auf das Zugseil, in der Nippelkammer sicher fixiert sowie zuverlässig und verliersicher gehalten.

Unter "Seilnippel" wird eine auf das Zugseil, vorzugsweise an dessen Seilende, aufgesetzte und dort verpresste Hülse oder Kappe verstanden. Der Seilnippel kann zylindrisch rund oder tropfenförmig sein. Vorzugsweise ist der Seilnippel jedoch in Sechseck- oder Sechskantform, insbesondere mit zumindest einem Flächenpaar mit zueinander parallelen Nippelflächen, ausgeführt.

Die Nippelkammer weist eine, insbesondere im Wesentlichen rechteckförmige, Kammeröffnung sowie zueinander radial - also bezogen auf die Drehachse der Seiltrommel in Radialrichtung - beabstandete Kammerwände auf. Diese erstrecken sich ausgehend von der Kammeröffnung an der entsprechenden Trommelstirnseite axial - also bezogen auf die Drehachse der Seiltrommel in Axialrichtung - in den Trommelkörper hinein. Vorzugsweise erstrecken sich oder verlaufen die Kammerwände tangential, wobei die tangentiale Länge oder Ausdehnung der Kammerwände geeigneter Weise 15% bis 25%, vorzugsweise (20 ± 2,5) %, des Durchmessers der Seiltrommel beträgt.

Die Nippelkammer weist an zumindest einer deren Kammerwände ein Begrenzungselement auf, den der Seilnippel beim Einführen über die Kammeröffnung in die Nippelkammer untergreift. In vorteilhafter Ausgestaltung ist das Begrenzungselement oval oder tropfenförmig, wobei sich diese Form des Begrenzungselements in Axialrichtung zur der Kammeröffnung gegenüberliegenden Trommelstirnseite hin verjüngt. Zweckmäßigerweise ist das Begrenzungselement als Rippe ausgeführt, die sich radial in die Nippelkammer hinein und entlang eines begrenzten axialen Abschnitts der Kammerwand erstreckt. Besonders vorteilhaft ist an beiden Kammerwänden der Nippelkammer jeweils mindestens ein, vorzugsweise an der Kammerwand radial erhabenes, Begrenzungselement vorgesehen. Vorteilhafterweise sind die zumindest zwei kammerseitigen Begrenzungselemente in Radialrichtung einander diametral gegenüberliegend angeordnet, befinden sich also entlang desselben Radius.

Zweckmäßigerweise ist die lichte Weite zwischen den Kammerwänden im Bereich des Begrenzungselements bzw. zwischen den Begrenzungselementen kleiner als der Durchmesser oder als der Abstand zwischen gegenüberliegenden Nippelflächen des im Querschnitt vorzugsweise sechseckigen Seilnippels. Geeigneter Weise verengt das (jeweilige) Begrenzungselement die lichte Weite der Nippelkammer zwischen deren Kammerwänden am Ort des Begrenzungselement, insbesondere an dessen radial orientierten Scheitel bzw. am radialen Maximum, um 3% bis 8%, vorzugsweise um (5 ± 1,5) %.

Gemäß der beanspruchten Erfindung, unterteilt das Begrenzungselement die Nippelkammer im Bereich der Kammeröffnung in Tangentialrichtung bzw. in Umfangsrichtung der Seiltrommel in zwei Kammerbereiche, deren tangentiale Länge - also deren auf die Drehachse der Seiltrommel bezogenen Ausdehnung in Tangentialrichtung - kleiner ist als die Länge des Seilnippels in Seil- bzw. Nippellängsrichtung.

Der Seilnippel wird im Zuge der Montage des Zugseils auf oder an der Seiltrommel in die zugeordnete Nippelkammer von der dieser zugeordneten Trommelstirnseite her eingeführt und in einem Montageschritt in Axialrichtung unter das oder jedes Begrenzungselement geführt. Hierbei kann der Seilnippel mit dessen dem Zugseil abgewandten, also freiendseitigen Nippelstirnseite in einen in Umfangs- bzw. Tangentialrichtung vor oder hinter dem Begrenzungselement befindlichen Kammerbereich eingesetzt werden. Die tangentiale Länge bzw. die auf die Drehachse der Seiltrommel bezogene Ausdehnung des Seilnippels in Tangentialrichtung ist daher vorzugsweise gleich oder lediglich geringfügig größer als der Durchmesser seiner Einhüllenden oder als der Abstand zwischen zwei parallelen Nippelflächen des Seilnippels.

Anschließend wird der Seilnippel gekippt, so dass dessen Nippellängsachse aus der zur Trommeldrehachse parallelen Lage in eine hierzu geneigte Lage überführt wird. In dieser gekippten, geneigten oder winkligen Lage wird der Seilnippel unter das Begrenzungselement und anschließend in die Soll-Position geführt. Auch kann der Seilnippel mit zur Trommeldrehachse quer verlaufender Nippellängsachse in die Nippelkammer eingesetzt werden, indem der Seilnippel über das jeweilige Begrenzungselement gepresst, mit anderen Worten dieses vom Seilnippel rastoder clipsartig axial übergedrückt wird. Insbesondere für diese Montagevariante ist es vorteilhaft, wenn das Begrenzungselement abgerundet ist, insbesondere eine gerundete Oberfläche aufweist.

Gemäß einer vorteilhaften Weiterbildung ist das Zugseil beidendseitig mit dort jeweils einem Seilnippel in jeweils eine Nippelkammer geführt. Hierzu weist die Seiltrommel in vorteilhafter Weiterbildung an beiden Stirnseiten (Trommelstirnseiten oder stirnseitigen Kreisflächen) jeweils eine Nippelkammer auf. Mit anderen Worten weist die Seiltrommel in vorteilhafter Weiterbildung an der zweiten, der ersten Stirnseite (erste stirnseitige Kreisfläche) gegenüberliegenden Stirnseite (zweite stirnseitige Kreisfläche) eine zugängliche zweite Nippelkammer zur Aufnahme eines Seilnippels eines weiteren Zugseils oder eines am zweiten Seilende des Zugseils befestigten zweiten Seilnippels auf. Dabei geht diese zweite Nippelkammer wiederum über einen zweiten stirnseitigen Nutabschnitt oder ein (auslaufendes) Rillenende in die umfangsseitige Seilnut der Seiltrommel über. Die in die Nippelkammern einmündenden stirnseitigen Nutabschnitte oder Rillenenden verlaufen vorzugsweise in entgegengesetzte Umfangsrichtungen der Seiltrommel und in einem radial äußeren Stirnseitenbereich der Seiltrommel.

Bei der Montage des Zugseils wird zunächst dessen Seilnippel an vorzugsweise dem einlaufenden Seilende in die zugeordnete Nippelkammer, vorzugsweise auf der dem Seilantrieb zugewandten Stirnseite der Seiltrommel, eingesetzt. Auch kann zunächst der Seilnippel am anderen (auslaufenden) Seilende in die zugeordnete Nippelkammer eingesetzt werden. Aufgrund des Begrenzungselements - oder der zwei oder mehreren Begrenzungselemente - ist dabei ein Herausgleiten des Seilnippels aus der Nippelkammer vermieden.

Nachdem der Seilnippel in der Nippelkammer in dessen Soll-Position geführt worden ist, wird das Zugseil mit einer Anzahl an axial beabstandeten Windungen unter Bildung des einlaufenden Seilabschnitts und des hierzu axial beabstandeten auslaufenden Seilabschnitt in die mantel- oder umfangsseitige Seilnut der Seiltrommel eingelegt. Nachdem das Zugseil über die Umlenkelemente oder -rollen geführt und mit dem oder jedem Schienengleiter verbunden worden ist, wird der zweite Seilnippel am verbleibenden Seilende in die zweite Nippelkammer eingelegt. Im Falle zweier Zugseile werden diese auf die Seiltrommel aufgespult und anschließend das Seilantriebsgehäuse montiert (aufgeclipst), wobei in der weiteren Montage des Fensterhebers die Zugseile über die Umlenkelemente bzw. - rollen verlegt und zu oder an den Schienengleitern verbunden werden. Die zweite Nippelkammer weist vorteilhafterweise ebenfalls zumindest ein solches Begrenzungselement zur Lagepositionierung bzw. Lagesicherung des dortigen Seilnippels bei dessen Einführen (Einsetzen) in die Nippelkammer auf.

Eine nachfolgend auch einfach als Fensterheber bezeichnete Fensterheberbaugruppe (Fensterhebersystem) als bevorzugtes Verstellsystem für ein Kraftfahrzeug weist mindestens eine Führungsschiene und eine erfindungsgemäße Seilantriebsvorrichtung auf. Im Falle eines einstrangigen Fensterhebers ist an der dann einzelnen Führungsschiene ein Schienengleiter mit Mitnahmefunktion für eine Fensterscheibe beweglich geführt. Die Seilantriebsvorrichtung ist auch für einen zweistrangigen Fensterheber mit zwei parallelen Führungsschienen geeignet, an denen dann jeweils ein mit dem Zugseil verbundener Schienengleiter schiebbeweglich geführt ist.

Nachfolgend wird ein Ausführungsbeispiel der Erfindung anhand einer Zeichnung näher erläutert. Darin zeigen:
- Fig. 1: in schematischer Darstellung einen Fensterheber (Fensterheberbaugruppe, Fahrzeugfensterheber) mit einer Seilantriebsvorrichtung und mit zwei Führungsschienen mit daran geführten und mit der Seilantriebsvorrichtung verbundenen Schienengleitern mit Mitnehmerfunktion für eine (Fahrzeug-)Fensterscheibe,
- Fig. 2: in perspektivischer Darstellung ein Seilantriebsgehäuse mit einliegender Seiltrommel mit aufgespultem Zugseil mit Blick auf die antriebsseitige Stirnseite der Seiltrommel,
- Fig. 3: in perspektivischer Darstellung den Seilantrieb mit einem Elektromotor mit angekoppeltem Getriebe und mit einem getriebeseitigen (abtriebseitigen) Drehzapfen für die Seiltrommel,
- Fig. 4: in Draufsicht die Seiltrommel mit Blick auf eine dem Seilantrieb abgewandte, im Seilantriebsgehäuse einliegende Stirnseite mit in einer Nippelkammer einsitzendem Seilnippel,
- Fig. 5: einen Ausschnitt V aus Fig. 4 in größerem Maßstab mit Blick auf an gegenüberliegenden Kammerwänden angeordnete Begrenzungselemente in Form von radial orientierten Rippen,
- Fig. 6a und 6b: in einem Ausschnitt gemäß Fig. 5 den Seilnippel beim Einführen in einen Kammerbereich vor bzw. hinter den Begrenzungselementen der Nippelkammer der Seiltrommel,
- Fig. 7a und 7b: in einer Schnittdarstellung die Seiltrommel und den Seilnippel in dessen Einführposition gemäß den Figuren 6a und 6b,
- Fig. 8: in einer Schnittdarstellung gemäß den Figuren 7a und 7b die Seiltrommel und den Seilnippel in einer Position axial unterhalb des kammerwandseitigen Begrenzungselements,
- Fig. 9: in einem Ausschnitt gemäß den Figuren 5 und 6 den Seilnippel beim Einführen in die Nippelkammer durch (axiales) Überdrücken des oder jedes Begrenzungselements,
- Fig. 10: eine Schnittdarstellung entlang der Linie X-X in Fig. 9,
- Fig. 11: perspektivisch in einer Schnittdarstellung den Seilnippel in dessen Position axial unterhalb des Begrenzungselements innerhalb der Nippelkammer mit in Tangentialrichtung orientierter Nippellängsachse (axial), und
- Fig. 12: die Einbausituation gemäß Fig. 11 in einer Schnittdarstellung gemäß Fig. 10.

Einander entsprechende Teile und Größen sind in allen Figuren mit den gleichen Bezugszeichen versehen.

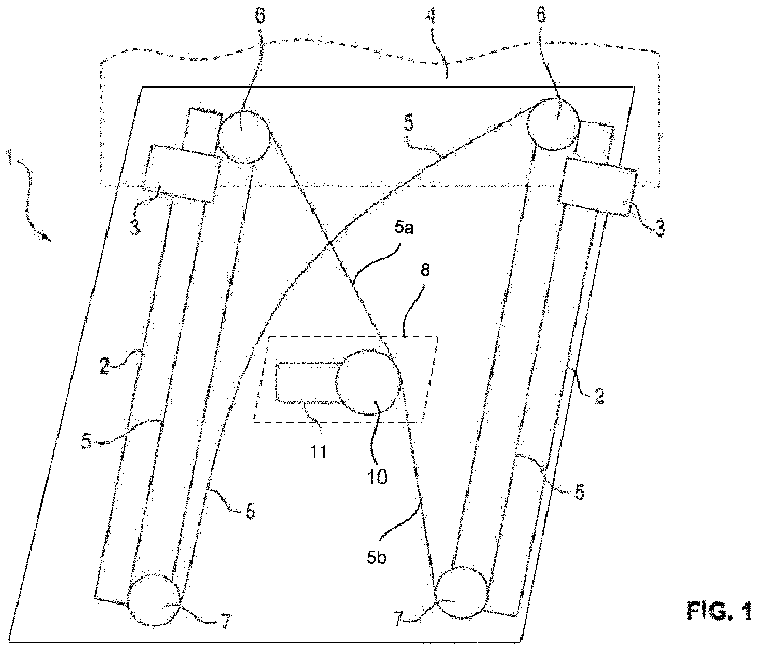

Fig. 1 zeigt einen Fensterheber 1 als Verstellsystem für ein Kraftfahrzeug, im Ausführungsbeispiel einen sogenannten zweitrangigen Seilfensterheber, mit zwei parallelen Führungsschienen 2, an denen Schienengleiter 3 mit Mitnehmerfunktion für eine Fensterscheibe 4 schiebebeweglich geführt sind. Die Fensterscheibe 4 ist an den Schienengleitern 3 gehalten, beispielsweise klemmfixiert. Die Schienengleiter 3 sind mit einem Zugseil 5 verbunden, das über obere und untere Umlenkelemente 6 bzw. 7, vorzugsweise in Form von Umlenkrollen, geführt und an eine Seilantriebsvorrichtung 8 gekoppelt ist. Eine Drehbewegung der bevorzugt elektromotorischen Seilantriebsvorrichtung 8 führt zu einem Verfahren der Fensterscheibe 4 in eine Offenstellung oder - in Gegenrichtung - in eine Schließstellung.

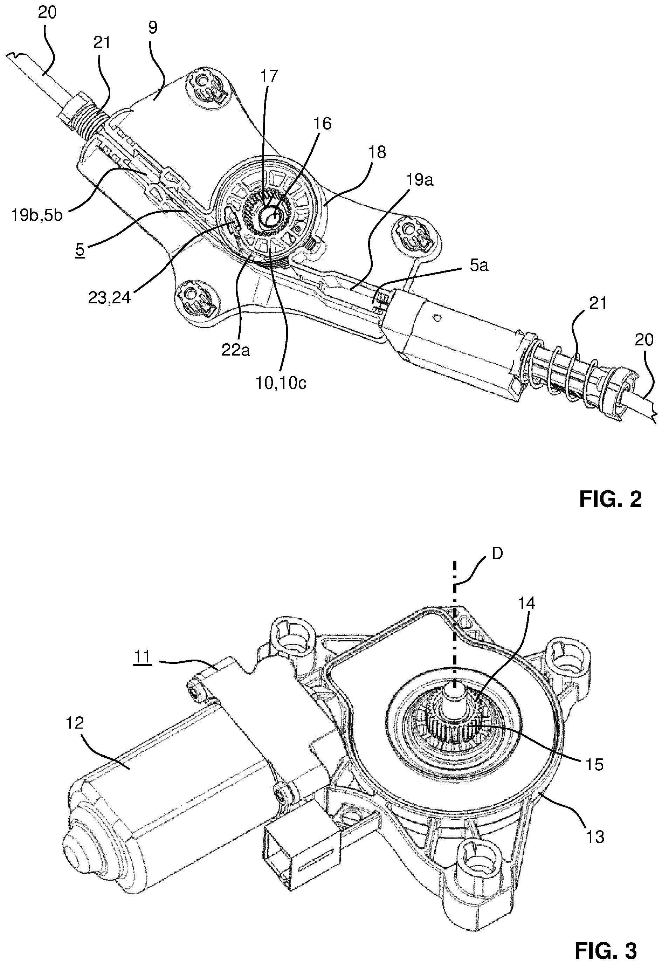

Die Seilantriebsvorrichtung 8 weist ein in Fig. 2 gezeigtes Seilantriebsgehäuse 9 mit darin aufgenommener Seiltrommel 10 und einen in Fig. 3 gezeigten Stellantrieb 11 auf. Der Stellantrieb 11 weist einen, beispielsweise bürstenbehafteten, Elektromotor 12 und ein damit antriebstechnisch gekoppeltes Schneckengetriebe auf. Dieses weist ein in einem Getriebegehäuse 13 aufgenommenes (nicht erkennbares) Schneckenrad auf, das mit einer ebenfalls nicht sichtbaren Schnecke kämmt, die auf einer Motorwelle des Elektromotors 12 wellenfest (drehfest) gehalten ist. Das Schneckenrad ist mit einem Drehzapfen 14 gekoppelt oder verbunden, der im Ausführungsbeispiel nach Art eines Zahnrades oder Ritzels eine Außenverzahnung 15 aufweist.

Der Drehzapfen 14 ist im Montagezustand der Seilantriebsvorrichtung 8 mit der Seiltrommel 10 formschlüssig verbunden (gefügt). Wie aus Fig. 2 ersichtlich ist, weist hierzu die Seiltrommel 10 eine zentrale Aufnahmeöffnung 16 mit einer Innenverzahnung 17 zur Herstellung einer formschlüssigen Fügeverbindung mit dem Drehzapfen 14 - bzw. dessen Außenverzahnung 15 - des Stellantriebs 11 auf. Die Seiltrommel 10 ist im Seilantriebsgehäuse 9 um eine Drehachse D drehbar aufgenommen oder gelagert. Richtungsangaben, insbesondere axial, radial oder tangential bzw. in Axialrichtung A, in Radialrichtung R oder in Tangentialrichtung T, sind auf die Drehachse D bezogen.

Wie in Fig. 2 erkennbar ist, weist das Seilantriebsgehäuse 9 eine die Seiltrommel 10 abschnittsweise oder teilweise umfassende Gehäusewand 18 auf, welche in einen einlaufenden und in einen auslaufenden Seilkanal 19a, 19b ausläuft oder übergeht. Die Gehäusewand 18 des Seilantriebsgehäuses 9 umfasst die Seiltrommel 10 mit einem bevorzugten Umfangswinkel von (230 ± 15)°. Ein dabei gebildeter Ringspalt zwischen der Seiltrommel 10 und der Gehäusewand 18 ist geeigneter Weise kleiner als der Durchmesser des Zugseils 5, so dass dieses auf der Seiltrommel 10 gesichert ist.

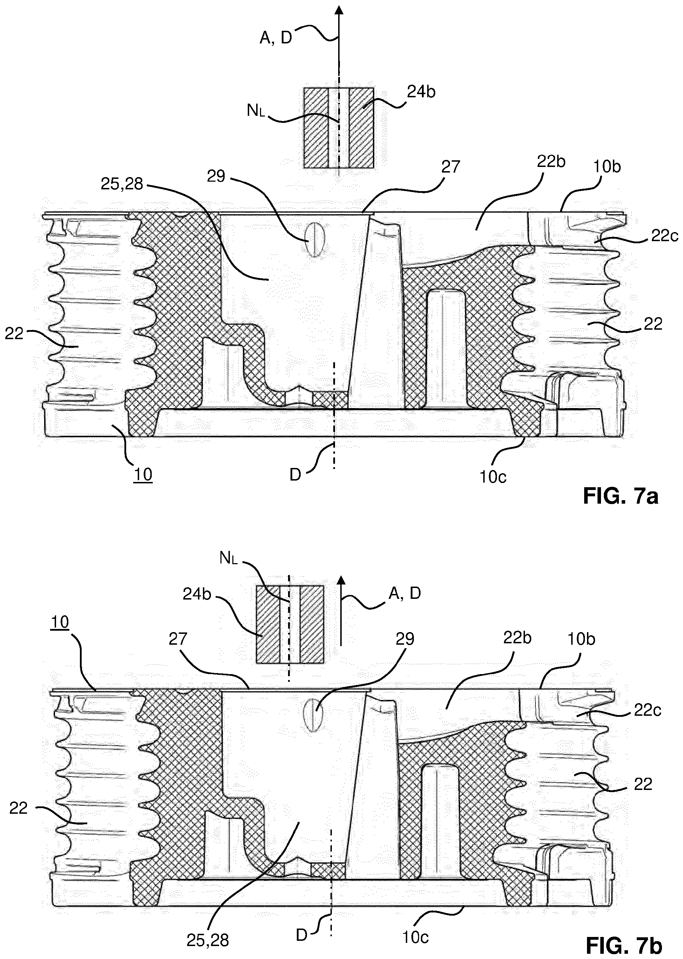

Das Zugseil 5 ist im Ausführungsbeispiel als Innenzug mit einer flexiblen Zughülle 20 ausgeführt (Bowdenzugausführung). Das Zugseils 5 bzw. der Innenzugs umschlingt mit einer nicht näher bezeichneten Seilschlaufe die Seiltrommel 10 in mehreren axial beabstandeten Seilwindungen. Das Zugseil 5 bzw. die Seilschlaufe weist einen einlaufenden Seilabschnitt (ein erstes Seilende) 5a und einen auslaufenden Seilabschnitt (ein zweites Seilende) 5b auf, die im einlaufenden und im auslaufenden Seilkanal 19a bzw. 19b angeordnet (verlegt) sind. Aufgrund des geeignet bemessenen Ringraums zwischen der Seiltrommel 10 und der Gehäusewand 18 ist sichergestellt, dass das Zugseils 5 bzw. dessen Innenzug entlang der Gehäusewand 18 an keiner Stelle aus einer umfangsseitigen Seilrille oder Seilnut (Figuren 7, 8, 10 und 12) der Seiltrommel 10 herausgleiten kann.

Die beiden Enden der Zughülle 20 sind am Seilantriebsgehäuse 9 abgestützt, während das Zugseil 5 als Innenzug in das Seilantriebsgehäuse 9 und dort um die Seiltrommel 10 mit den mehreren Seilwindungen geführt ist. Die Enden der Zughülle 20 liegen über jeweils ein Federelement 21 an den Seilkanälen 19a und 19b des Seilantriebsgehäuse an. Hierdurch wird das Zugseil 5 vorgespannt, so dass eine Seillose im Zugseil kompensiert und ein automatischer Seillängenausgleich des Zugseils 5 bereitgestellt ist. Auf die Seiltrommel 10 ist das Zugseil 5 unter Bildung des einlaufenden und eines auslaufenden Seilabschnitts 5a, 5b aufgespult. Der einlaufende Seilabschnitts 5a ist auf der in Fig. 2 sichtbaren (zweiten) Stirnseite 10c der Seiltrommel 10 in einem im radial äußeren Bereich der Seiltrommel 10 vorgesehenen Rillenende oder (ersten) Nutabschnitt 22a weitergeführt, der in eine erste Nippelkammer 23 der Seiltrommel 10 mündet. In diese ist ein (erster) Seilnippel 24a, der am entsprechenden Seilende des Zugseils 5 befestigt ist, eingelegt und dort festgelegt.

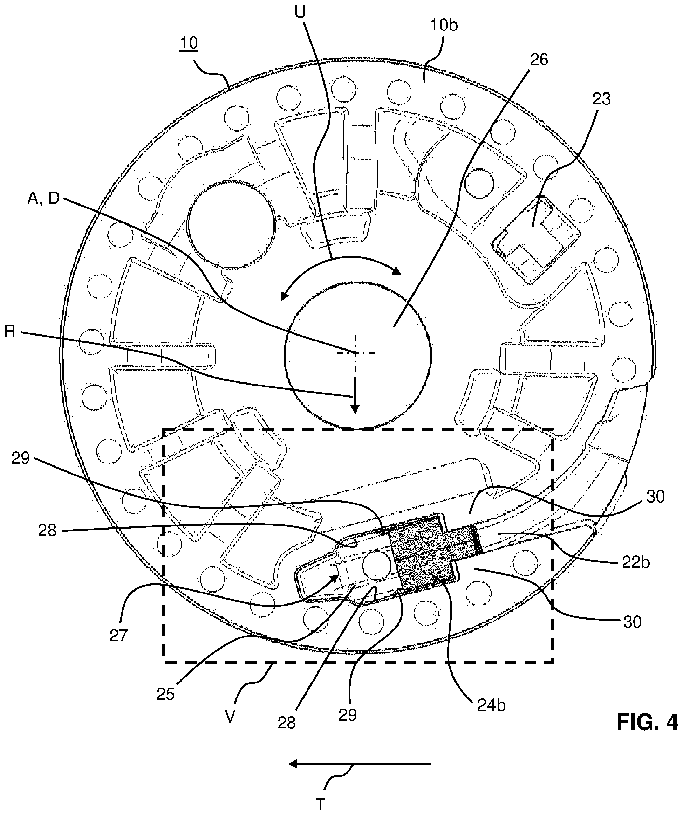

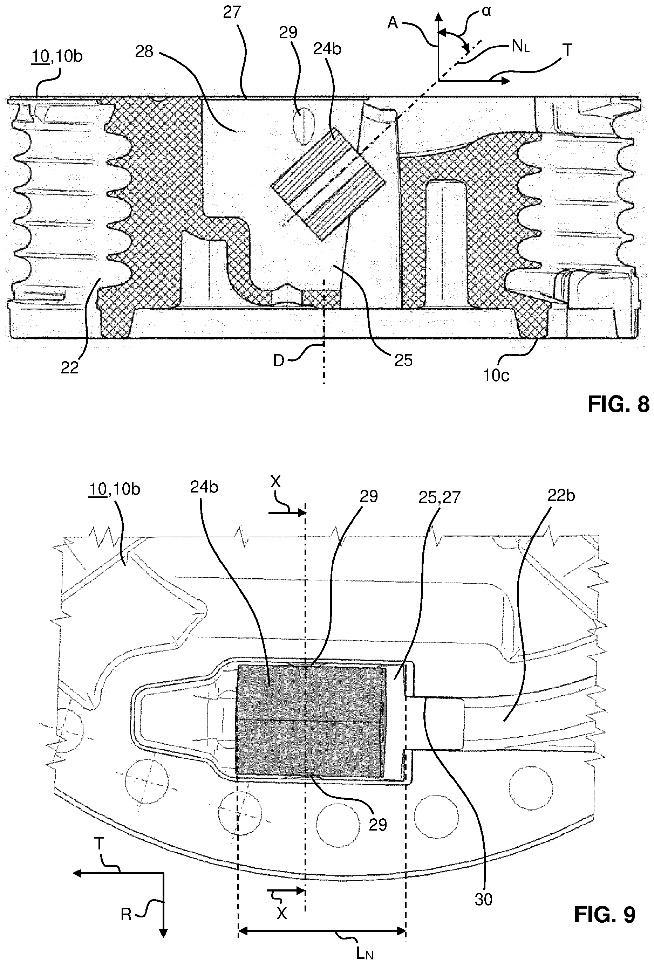

Der auslaufende Seilabschnitts 5b ist auf der gegenüberliegenden, in Fig. 2 nicht sichtbaren, vom Seilantriebsgehäuse 9 abgedeckten Stirnseite 10b (Figuren 7 und 8) der Seiltrommel 10 ebenfalls in einem im radial äußeren Bereich der Seiltrommel 10 vorgesehenen Rillenende oder (zweiten) Nutabschnitt 22b geführt, der in eine zweite Nippelkammer 25 der Seiltrommel 10 mündet, welche in Fig. 4 erkennbar und bezeichnet ist. In diese ist ein nicht näher bezeichneter zweiter Seilnippel, der am entsprechenden Seilende des Zugseils 5 befestigt ist, eingelegt und dort festgelegt.

Wie aus den Figuren 7a, 7b und 8 ersichtlich ist, weist die Seiltrommel 10 einen Trommelmantel 10a mit einer helixartigen oder schraubenförmigen Seilnut 22 zur Aufnahme des Zugseils 5 oder einer Seilschlaufe des Zugseils 5 auf. Wie aus Fig. 4 ersichtlich ist, weist die Seiltrommel 10 an deren Stirnseiten (Trommelstirnseiten, stirnseitigen Kreisflächen) 10b, 10c die jeweilige Nippelkammer 23, 25 auf, die über den jeweiligen stirnseitigen Nutabschnitt (das jeweilige Rillenende) 22a, 22b in die umfangsseitige Seilnut 22 der Seiltrommel 10 übergeht.

Die Figuren 4 bis 6b und 9 zeigen die Seiltrommel 10 mit Blick auf deren dem Seiloder Stellantrieb 11 abgewandte erste Stirnseite 10b, mit welcher die Seiltrommel 10 im Seilantriebsgehäuse 9 einliegt.

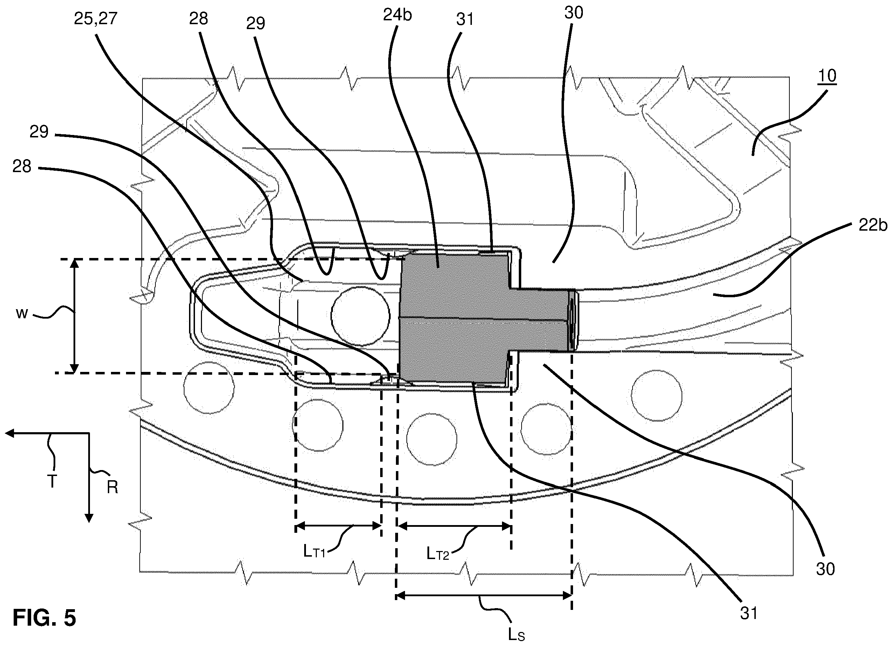

Wie in Fig. 4 und insbesondere in Fig. 5 vergleichsweise deutlich erkennbar ist, mündet der stirnseitige Nutabschnitt 22b als Rillenende aus dem dort oberen Nutabschnitt 22c (Figuren 7a, 7b) der Seilnut 22 in die zugeordnete Nippelkammer 25 ein. Die Nippelkammer 25 dient zur Aufnahme und Festlegung des Seilnippels 24b, der am Seilende - im Ausführungsbeispiel des einlaufenden Seilabschnitts 5a - befestigt, beispielsweise mit oder an diesem verpresst, ist.

In Fig. 4 sind in einer die Seiltrommel 10 durchgreifenden zentralen Trommelöffnung 26 die zur Zeichenebene normale Drehachse D der Seiltrommel 10 und die hierzu koaxiale Axialrichtung A als strichpunktiertes Kreuz sowie die hierauf bezogene Radial- und Tangentialrichtung R bzw. T als Pfeile veranschaulicht.

Wie in Fig. 5 als vergrößerter Ausschnitt V aus Fig. 4 vergleichsweise deutlich ersichtlich ist, weist die Nippelkammer 25 eine von der entsprechenden Trommelstirnseite 10b zugängliche Kammeröffnung 27 sowie zwei in Radialrichtung R zueinander beabstandete Kammerwände 28 auf. Diese verlaufen in Tangentialrichtung T und erstrecken sich in Axialrichtung A, also in die Zeichenebene hinein. An der jeweiligen Kammerwand 28 der Nippelkammer 25 ist ein Begrenzungselement 29 in Form einer radialen Rippe angeformt. Mit anderen Worten erstreckt sich das Begrenzungselement 29 in Radialrichtung R in die Nippelkammer 25 hinein. Das Begrenzungselement 29 ist also in Richtung der gegenüberliegenden Kammerwand 28 orientiert.

Erkennbar mündet diese Nippelkammer 25 tangential oder in Umfangsrichtung U (Fig. 4) in den dortigen Nutabschnitt bzw. in das dortige Rillenende 22b der Seilnut 22, wie in Fig. 9 vergleichsweise deutlich erkennbar ist. Ebenfalls erkennbar ist der Seilnippel 24b in der gezeigten Montageposition unter eine Hintergriffkontur 30 geführt. Diese befindet sich am Übergang der Nippelkammer 25 zum Nutabschnitt 22b der Seilnut 22. Dadurch ist der Seilnippel 24b, in dessen Soll-Position oder - Lage, in der Nippelkammer 25 axial formschlüssig gehalten.

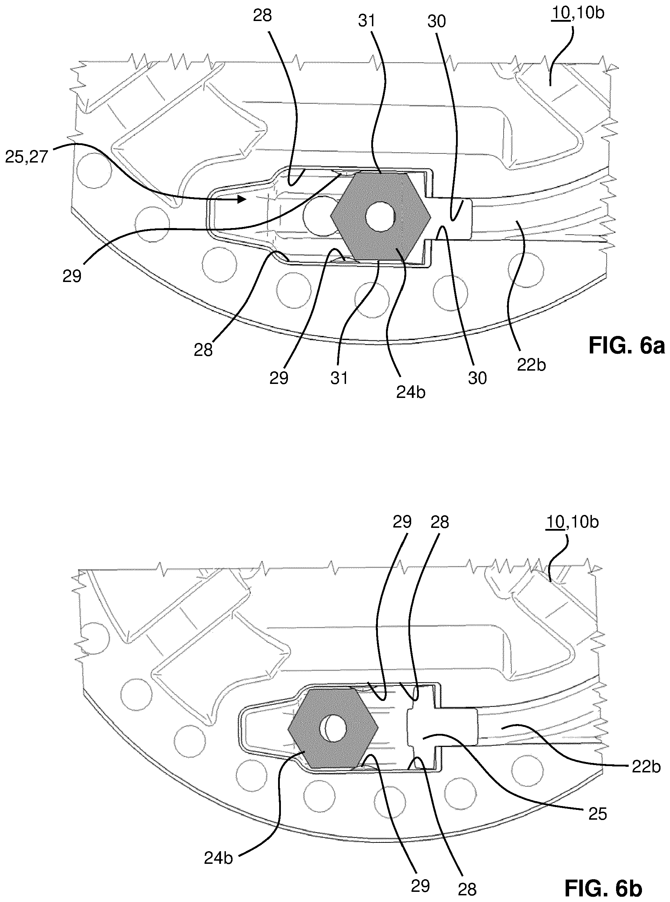

Wie in Verbindung mit Fig. 9 veranschaulicht ist, beträgt die tangentiale Länge (Kammerlänge) oder Ausdehnung L_{N} der Nippelkammer 25 - ohne Hintergriffkontur 30 - vorzugsweise (20 ± 2,5) % des Durchmessers der Seiltrommel 10. Die lichte Weite w zwischen den Kammerwänden im Bereich der Begrenzungselemente 29 ist kleiner als der Abstand zwischen gegenüberliegenden Nippelflächen 31 des vorzugsweise sechskantigen (im Querschnitt sechseckigen) Seilnippels 24b, dessen sechseckiger Querschnitt in den Figuren 6a und 6b erkennbar ist.

Das jeweilige Begrenzungselement 29 verengt den Abstand bzw. die lichte Weite der Nippelkammer 25 zwischen deren Kammerwänden 28 am Ort des Begrenzungselements 29, insbesondere am radial orientierten Scheitel bzw. am radialen Maximum des Begrenzungselements 29, um 3% bis 8%, vorzugsweise um (5 ± 1,5) %. Bei den im Ausführungsbeispiel einander diametral gegenüberliegend angeordneten zwei Begrenzungselementen 29 ist die lichte Weite w der Nippelkammer 25 zwischen deren Kammerwänden 28 am Ort der Begrenzungselemente 29 vorzugsweise um insgesamt etwa 4% bis 10%, insbesondere um 6% bis 8%, gegenüber den Wandbereichen ohne Begrenzungselement verengt.

Das jeweilige Begrenzungselement 29 unterteilt die Nippelkammer 25 im Bereich der Kammeröffnung 27 in Tangentialrichtung T bzw. in Umfangsrichtung U der Seiltrommel 10 in zwei Kammerbereiche, deren tangentiale Länge L_{T1} für den dem Nutabschnitt 22b abgewandten, in Figur 5 linken Kammerbereiche und deren tangentiale Länge L_{T2} für den dem Nutabschnitt 22b zugewandten, in Figur 5 rechten Kammerbereiche kleiner ist als die Länge (Nippellänge) Ls des Seilnippels 24b in der hier der Tangentialrichtung T entsprechenden Seil- bzw. Nippellängsrichtung.

Die Figuren 6a und 6b sowie 7a und 7b zeigen zwei Varianten bzw. Möglichkeiten des Einsetzens des Seilnippels 24b in die Nippelkammer 25. Der Seilnippel 24b wird im Zuge der Montage des Zugseils 5 auf oder an der Seiltrommel 10 in die zugeordnete Nippelkammer 25 von der dieser zugeordneten Trommelstirnseite 10b her eingeführt. Dies erfolgt in der Weise, dass der Seilnippel 24b - wie dargestellt - mit dessen dem Zugseil 5 abgewandten Ende (Nipplefreiende) und mit der dortigen Stirnseite voran in den rechten Kammerbereich (Fig. 6a, 7a) oder in den linken Kammerbereich (Fig. 6b, 7b) der Nippelkammer 25 eingesetzt wird. Dabei wird der Seilnippel 24b in Axialrichtung A in die Nippelkammer 25 hinein bis unter das jeweilige Begrenzungselement 29 geführt und anschließend aus der axialen Lage in Richtung einer tangentialen Lage gekippt oder verschwenkt.

Fig. 8 zeigt diesen Montageschritt des Seilnippel 24b bei dessen Neigung oder Verschwenken aus der axialen Lage mit zur Axialrichtung A paralleler Nippellängsachse N_{L} in eine zur Tangentialrichtung T parallelen Lage oder in eine Winkellage oder Winkelposition zwischen der Axial- und Tangentialrichtung A, T, beispielsweise mit oder in einem Winkel α von etwa 45° zur Axialrichtung A. In dieser Situation befindet sich der Seilnippel 24b innerhalb der Nippelkammer 25 und dort axial unterhalb des Begrenzungselements 29. Dabei oder anschließend wird der Seilnippel 24b am Begrenzungselement 29 vorbei in Richtung des Nutabschnitts (Rillenendes) 22b der Seilnut 22 geführt, um dort die Hintergiffkontur 30 zu untergreifen.

Wie aus Fig. 8 vergleichsweise deutlich ersichtlich ist, ist das (jeweilige) Begrenzungselement 29 oval oder tropfenförmig. Das Begrenzungselement 29 verjüngt sich in Axialrichtung A zur der Kammeröffnung 27 gegenüberliegenden Trommelstirnseite 10c hin. Das Begrenzungselement 29 ist als eine Rippe ausgeführt, die sich radial in die Nippelkammer 25 hinein und entlang eines begrenzten axialen Abschnitts der Kammerwand 28 erstreckt. Das Begrenzungselement 29 ist aus der jeweiligen Kammerwand 28 vorzugsweise ausgeformt.

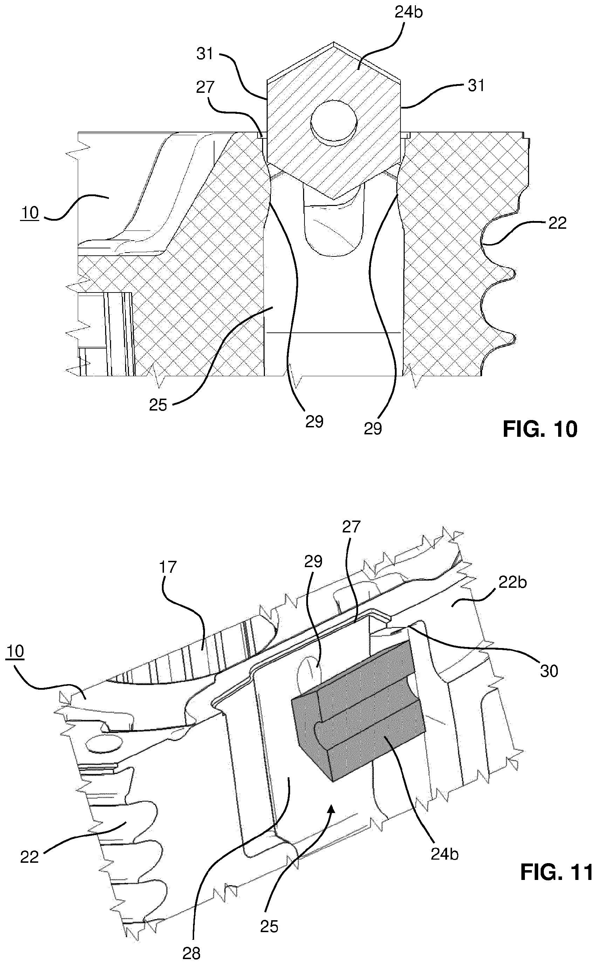

Die Figuren 9 und 10 zeigen eine weitere Variante oder Möglichkeit des Einsetzens des Seilnippel 24b in die Nippelkammer 25. Hierbei wird der Seilnippel 24b mit zur Trommeldrehachse D quer verlaufender bzw. in Tangentialrichtung orientierter Nippellängsachse N_{L} in die Nippelkammer 25 eingesetzt. Dabei wird der Seilnippel 24b über das jeweilige Begrenzungselement 29 gepresst, so dass dieses vom Seilnippel 24b axial übergedrückt wird.

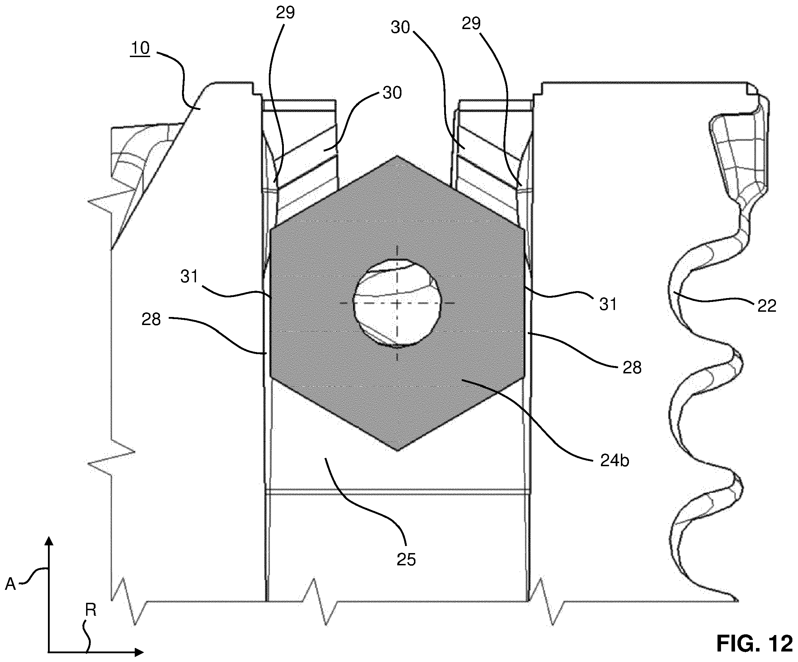

Die Figuren 11 und 12 zeigen den Montagezustand des Seilnippel 24b in der Nippelkammer 25, bei dem der Seilnippel 24b innerhalb der Nippelkammer 25 eine bestimmungsgemäße Position oder Lage axial unterhalb des Begrenzungselements 29, beispielsweise bereits am Übergang zum Nutabschnitt (Rillenende) 22b, eingenommen hat. In der Endmontageposition ist der Seilnippel 24b mit einem Nippellängsabschnitt unterhalb der Hintergiffkontur 30 angeordnet und in der Nippelkammer 25 fixiert, insbesondere auch aufgrund der auf das Zugseil 5 wirkenden Zugkraft des Federelements 21.

Bei der Montage des Zugseils 5 wird zunächst dessen Seilnippel 24a, beispielsweise am einlaufenden Seilende in die zugeordnete Nippelkammer 23, eingesetzt. Aufgrund des Begrenzungselements 29 oder der zwei oder mehreren Begrenzungselemente 29 ist dabei ein Herausgleiten des Seilnippels 24a aus der Nippelkammer 23 vermieden. Nachdem der Seilnippel 24a innerhalb der Nippelkammer 23 in dessen Soll-Position geführt worden ist, wird das Zugseil 5 mit einer Anzahl an axial beabstandeten Windungen unter Bildung des einlaufenden Seilabschnitts 5a und des hierzu axial beabstandeten auslaufenden Seilabschnitt 5b in die mantel- oder umfangsseitige Seilnut 22 der Seiltrommel 10 eingelegt, und das Zugseil 5 wird auf die Seiltrommel 10 aufgespult. Nachdem das Zugseil 5 über die Umlenkelemente oder -rollen 6, 7 geführt und mit dem oder jedem Schienengleiter 3 verbunden ist, wird der zweite Seilnippel 24b am verbleibenden Seilende in die zweite Nippelkammer 25 in entsprechender Art und Weise eingelegt und dort fixiert.

Zusammenfassend betrifft die Erfindung eine Seilantriebsvorrichtung 8 eines Verstellsystems 1 eines Kraftfahrzeugs, aufweisend einen Stellantrieb 11 und ein Seilantriebsgehäuse 9, in welches eine mit dem Stellantrieb 11 drehbar gekoppelte Seiltrommel 10 mit aufgespultem Zugseil 5 aufgenommen ist, wobei die Seiltrommel 10 an zumindest einer Stirnseite 10b, 10c zur Aufnahme eines am Zugseil 5 befestigten Seilnippels 24a, 24b eine Nippelkammer 23, 25 mit einer Kammeröffnung 27 und mit zueinander beabstandeten Kammerwänden 28 aufweist, und wobei die Nippelkammer 23, 25 an zumindest einer der Kammerwände 28 ein Begrenzungselement 29 aufweist, den der Seilnippel 24a, 24b beim Einführen oder Einsetzen in die Nippelkammer 23, 25 untergreift.

Die Seiltrommel 10, die auch eine eigenständige Erfindung darstellt, weist einen Trommelmantel 10a mit einer helix- oder schraubenförmigen Seilnut 22 und an zumindest einer Trommelstirnseite 10b, 10c eine Nippelkammer 23, 25 mit einer Kammeröffnung 27 sowie mit zueinander beabstandeten Kammerwände 28 auf, wobei innerhalb der Nippelkammer 23, 25, insbesondere im Bereich deren Kammeröffnung 27, an zumindest einer der Kammerwände 28 ein in Richtung der gegenüberliegenden Kammerwand 28 orientiertes, insbesondere ovales oder tropfenförmiges, Begrenzungselement 29 vorgesehen, insbesondere an die Kammerwand 28 angeformt, ist.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

Zudem kann die beschriebene Lösung nicht nur in dem speziell dargestellten Anwendungsfall zum Einsatz kommen, sondern auch in ähnlicher Ausführung bei anderen Kraftfahrzeug-Anwendungen, wie zum Beispiel bei Tür- und Heckklappensystemen, bei einsträngigen Fensterhebern, bei Fahrzeugschlössern, bei verstellbaren Sitz- und Innenraumsystemen sowie bei elektrischen Antrieben, Steuerungen, Sensoren und deren Anordnung im Fahrzeug. Weitere Ausführungsformen können im Rahmen der beigefügten Ansprüche realisiert werden.

### Bezugszeichenliste

- 1: Fensterheber
- 2: Führungsschiene
- 3: Schienengleiter
- 4: Fensterscheibe
- 5: Zugseil/Innenzug
- 5a: einlaufender Seilabschnitt
- 5b: auslaufender Seilabschnitt
- 6: oberes Umlenkelement/-rolle
- 7: unteres Umlenkelement/-rolle
- 8: Seilantriebsvorrichtung
- 9: Seilantriebsgehäuse
- 10: Seiltrommel
- 10a: Trommelmantel
- 10b: erste Trommelstirnseite
- 10c: zweite Trommelstirnseite
- 11: Stellantrieb
- 12: Elektromotor
- 13: Getriebegehäuse
- 14: Drehzapfen
- 15: Außenverzahnung
- 16: Aufnahmeöffnung
- 17: Innenverzahnung
- 18: Gehäusewand
- 19a: einlaufender Seilkanal
- 19b: auslaufender Seilkanal
- 20: Zughülle
- 21: Federelement
- 22: Seilnut
- 22a: erster Nutabschnitt/Rillenende
- 22b: zweiter Nutabschnitt/Rillenende
- 22c: (oberer) Nutabschnitt
- 23: erste Nippelkammer
- 24a: erster Seilnippel
- 24b: zweiter Seilnippel
- 25: zweite Nippelkammer
- 26: zentrale Trommelöffnung
- 27: Kammeröffnung
- 28: Kammerwand
- 29: Begrenzungselement
- 30: Hintergriffkontur
- 31: Nippelfläche

- A: Axialrichtung
- D: Drehachse
- L_{N}: Kammerlänge/Ausdehnung
- Ls: Nippellänge
- L_{T1}: Länge des (linken) Kammerbereichs
- L_{T2}: Länge des (rechten) Kammerbereichs
- N_{L}: Nippellängsachse
- R: Radialrichtung
- T: Tangentialrichtung
- U: Umfangsrichtung
- d: Nippelbreite/Außenabmessung
- w: lichte Weite

## Patentansprüche

1. Seilantriebsvorrichtung (8) eines Verstellsystems (1), insbesondere eines Fensterhebers, eines Kraftfahrzeugs, aufweisend einen Stellantrieb (11) und ein Seilantriebsgehäuse (9), in welches eine mit dem Stellantrieb (11) gekoppelte oder koppelbare und um eine Drehachse (D) drehbare Seiltrommel (10) aufgenommen ist, auf welche ein Zugseil (5) aufgespult oder aufspulbar ist,
- wobei die Seiltrommel (10) zur Aufnahme des Zugseils (5) einen Trommelmantel (10a) mit einer helix- oder schraubenförmigen Seilnut (22) aufweist, die an zumindest einer Stirnseite (10b, 10c) der Seiltrommel (10) in eine Nippelkammer (23, 25) zur Aufnahme eines am Zugseil (5) endseitig befestigten Seilnippels (24a, 24b) mündet,
- wobei die Nippelkammer (23, 25) eine Kammeröffnung (27) sowie in Axialrichtung (A) verlaufende und in Radialrichtung (R) zueinander beabstandete Kammerwände (28) aufweist,
- wobei die Nippelkammer (23, 25) an zumindest einer der Kammerwände (28) ein Begrenzungselement (29) aufweist, den der Seilnippel (24a, 24b) beim Einführen über die Kammeröffnung (27) in die Nippelkammer (23, 25) untergreift, und
- wobei die lichte Weite (w) zwischen den Kammerwänden (28) im Bereich des Begrenzungselements (29) kleiner ist als der Durchmesser oder als der Abstand zwischen gegenüberliegenden Nippelflächen (31) des Seilnippels (24a, 24b), und
- **dadurch gekennzeichnet, dass** das Begrenzungselement (29) die Nippelkammer (23, 25) im Bereich der Kammeröffnung (27) in Tangentialrichtung (T) in zwei Kammerbereiche unterteilt, deren tangentiale Ausdehnung (L_{T1}, L_{T2}) kleiner ist als die Länge (Ls) des Seilnippels (24a, 24b).

2. Seilantriebsvorrichtung (8) nach Anspruch 1,
**dadurch gekennzeichnet,**
- **dass** das Begrenzungselement (29) als eine, vorzugsweise sich in Axialrichtung (A) erstreckende, insbesondere an der Kammerwand (28) radial erhabene, Rippe ausgeführt ist, und/oder
- **dass** das Begrenzungselement (29) oval oder tropfenförmig und in Axialrichtung (A) zur der Kammeröffnung (27) gegenüberliegenden Trommelstirnseite (10b, 10c) hin verjüngt ist.

3. Seilantriebsvorrichtung (8) nach Anspruch 1 oder 2,
**dadurch gekennzeichnet,**
**dass** an beiden Kammerwänden (28) der Nippelkammer (23, 25) jeweils mindestens ein Begrenzungselement (29) vorgesehen ist.

4. Seilantriebsvorrichtung (8) nach Anspruch 3,
**dadurch gekennzeichnet,**
**dass** die Begrenzungselemente (29) in Radialrichtung (R) einander diametral gegenüberliegend angeordnet sind.

5. Seilantriebsvorrichtung (8) nach einem der Ansprüche 1 bis 4,
**dadurch gekennzeichnet,**
- **dass** der Seilnippel (24a, 24b) im Querschnitt mehreckig, insbesondere sechseckig, ist, und/oder
- **dass** das der jedes Begrenzungselement (29) in die Kammerwand (28) eingeformt oder aus dieser ausgeformt ist.

6. Seilantriebsvorrichtung (8) nach einem der Ansprüche 1 bis 5,
**dadurch gekennzeichnet,**
**dass** die Seiltrommel (10) eine zentrale Aufnahmeöffnung (16) mit einer Fügekontur, insbesondere einer Innenverzahnung (17), zur Herstellung einer, vorzugsweise formschlüssigen, Fügeverbindung mit einer Gegenkontur, insbesondere einer Außenverzahnung (15), eines Drehzapfens (14) des Stellantriebs (11) aufweist.

7. Seilantriebsvorrichtung (8) nach einem der Ansprüche 1 bis 6,
**dadurch gekennzeichnet,**
**dass** am Übergang der Seilnut (22) in die Nippelkammer (23, 25) eine trommelseitige Hintergriffkontur (30) vorgesehen ist, den der Seilnippel (24a, 24b) im Montagezustand mit einem Nippelabschnitt untergreift.

8. Fensterheber (1) als Verstellsystem für ein Kraftfahrzeug, aufweisend mindestens eine Führungsschiene (2), an der ein Schienengleiter (3) mit Mitnahmefunktion für eine Fensterscheibe (4) beweglich geführt ist, und eine Seilantriebsvorrichtung (8) nach einem der Ansprüche 1 bis 7.

## Claims

1. Cable drive device (8) of an adjustment system (1), in particular of a window lifter, of a motor vehicle, having an actuating drive (11) and a cable drive housing (9) in which a cable drum (10) which is coupled, or able to be coupled, to the actuating drive (11) and rotatable about a rotation axis (D) and onto which a traction cable (5) is wound, or able to be wound, is received;
- wherein the cable drum (10) for receiving the traction cable (5) has a drum casing (10a) having a helical or spiral cable groove (22) which on at least one end side (10b, 10c) of the cable drum (10) opens into a nipple chamber (23, 25) for receiving a cable nipple (24a, 24b) fastened to the end side of the traction cable (5);
- wherein the nipple chamber (23, 25) has a chamber opening (27) as well as chamber walls (28) that run in the axial direction (A) and are mutually spaced apart in the radial direction (R);
- wherein the nipple chamber (23, 25) on at least one of the chamber walls (28) has a delimiting element (29), the cable nipple (24a, 24b) when introduced into the nipple chamber (23, 25) by way of the chamber opening (27) engaging below said delimiting element (29); and
- wherein the available width (w) between the chamber walls (28) in the region of the delimiting element (29) is smaller than the diameter or than the spacing between opposite nipple faces (31) of the cable nipple (24a, 24b); and
- **characterized in that**
the delimiting element (29) in the region of the chamber opening (27) in the tangential direction (T) subdivides the nipple chamber (23, 25) into two chamber regions of which the tangential extent (L_{T1}, L_{T2}) is smaller than the length (Ls) of the cable nipple (24a, 24b).

2. Cable drive device (8) according to Claim 1, **characterized in that**
- the delimiting element (29) is embodied as a rib that preferably extends in the axial direction (A), in particular so as to be radially raised on the chamber wall (28); and/or
- the delimiting element (29) is oval or teardropshaped and in the axial direction (A) tapers toward the drum end side (10b, 10c) opposite the chamber opening (27).

3. Cable drive device (8) according to Claim 1 or 2, **characterized in that**
at least one delimiting element (29) is provided on each of the two chamber walls (28) of the nipple chamber (23, 25).

4. Cable drive device (8) according to Claim 3, **characterized in that**
the delimiting elements (29) in the radial direction (R) are disposed so as to be diametrically opposite one another.

5. Cable drive device (8) according to one of Claims 1 to 4,
**characterized in that**
- the cable nipple (24a, 24b) in the cross section is polygonal, in particular hexagonal; and/or
- the, or each, delimiting element (29) is moulded in the chamber wall (28) or moulded from the latter.

6. Cable drive device (8) according to one of Claims 1 to 5,
**characterized in that**
the cable drum (10) has a central receptacle opening (16) having a joining contour, in particular an internal toothing (17), for establishing a preferably form-fitting joint with a mating contour, in particular an external toothing (15), of a pivot (14) of the actuating drive (11).

7. Cable drive device (8) according to one of Claims 1 to 6,
**characterized in that**
a drum-proximal rear-engagement contour (30) is provided at the transition from the cable groove (22) to the nipple chamber (23, 25), the cable nipple (24a, 24b) in the assembled state by way of a nipple portion engaging below said rear-engagement contour (30).

8. Window lifter (1) as an adjustment system for a motor vehicle, having at least one guide rail (2) on which a rail slider (3) having an entrainment function for a window glass (4) is movably guided, and a cable drive device (8) according to one of Claims 1 to 7.

## Revendications

1. Dispositif d'entraînement par câble (8) d'un système de réglage (1), en particulier d'un lève-vitre, d'un véhicule automobile, présentant un mécanisme de réglage (11) et un boîtier d'entraînement par câble (9), dans lequel est reçu un tambour à câble (10) accouplé ou pouvant être accouplé au mécanisme de commande (11) et pouvant tourner autour d'un axe de rotation (D), tambour sur lequel un câble de traction (5) est enroulé ou peut être enroulé,
- le tambour à câble (10) servant à la réception du câble de traction (5) présentant une enveloppe de tambour (10a) dotée d'une rainure à câble (22) en forme d'hélice ou de spirale, laquelle rainure débouche, au niveau d'au moins un côté frontal (10b, 10c) du tambour à câble (10), dans une chambre d'embout (23, 25) servant à la réception d'un embout de câble (24a, 24b) fixé à l'extrémité du câble de traction (5),
- la chambre d'embout (23, 25) présentant une ouverture de chambre (27) ainsi que des parois de chambre (28) s'étendant dans la direction axiale (A) et espacées les unes des autres dans la direction radiale (R),
- la chambre d'embout (23, 25) présentant, au niveau d'au moins l'une des parois de chambre (28), un élément de délimitation (29) qui vient en prise par le dessous avec l'embout de câble (24a, 24b) lors de l'introduction dans la chambre d'embout (23, 25) via l'ouverture de chambre (27), et
- la largeur intérieure (w) entre les parois de chambre (28) dans la région de l'élément de délimitation (29) étant inférieure au diamètre ou à la distance entre des surfaces d'embout (31) opposées de l'embout de câble (24a, 24b), et
- **caractérisé en ce que**
l'élément de délimitation (29) divise la chambre d'embout (23, 25) en deux régions de chambre dans la région de l'ouverture de chambre (27) dans la direction tangentielle (T), régions de chambre dont l'étendue tangentielle (LT1, LT2) est inférieure à la longueur (LS) de l'embout de câble (24a, 24b).

2. Dispositif d'entraînement par câble (8) selon la revendication 1,
**caractérisé**
- **en ce que** l'élément de délimitation (29) est réalisé sous la forme d'une nervure s'étendant de préférence dans la direction axiale (A), en particulier en relief radialement sur la paroi de chambre (28), et/ou
- **en ce que** l'élément de délimitation (29) est ovale ou en forme de goutte et se rétrécit dans la direction axiale (A) vers le côté frontal de tambour (10b, 10c) opposé à l'ouverture de chambre (27).

3. Dispositif d'entraînement par câble (8) selon la revendication 1 ou 2,
**caractérisé en ce**
**qu'**au moins un élément de délimitation (29) est respectivement prévu au niveau des deux parois de chambre (28) de la chambre d'embout (23, 25).

4. Dispositif d'entraînement par câble (8) selon la revendication 3,
**caractérisé en ce que**
les éléments de délimitation (29) sont disposés de manière diamétralement opposée l'un à l'autre dans la direction radiale (R).

5. Dispositif d'entraînement par câble (8) selon l'une des revendications 1 à 4,
**caractérisé**
- **en ce que** l'embout de câble (24a, 24b) est polygonal, en particulier hexagonal, en section transversale, et/ou
- **en ce que** chaque élément de délimitation (29) est moulé dans la paroi de chambre (28) ou est formé à partir de celle-ci.

6. Dispositif d'entraînement par câble (8) selon l'une des revendications 1 à 5,
**caractérisé**
**en ce que** le tambour à câble (10) présente une ouverture de réception centrale (16) dotée d'un contour d'assemblage, en particulier d'une denture intérieure (17), pour la réalisation d'une liaison d'assemblage, de préférence par complémentarité de formes, avec un contour conjugué, en particulier une denture extérieure (15), d'un tourillon rotatif (14) du mécanisme de commande (11) .

7. Dispositif d'entraînement par câble (8) selon l'une des revendications 1 à 6,
**caractérisé**
**en ce qu'**un contour d'entrée en prise par l'arrière (30) côté tambour est prévu à la transition de la rainure à câble (22) dans la chambre d'embout (23, 25), contour avec lequel vient en prise par le dessous l'embout de câble (24a, 24b) par une partie d'embout dans l'état de montage.

8. Lève-vitre (1) en tant que système de réglage pour un véhicule automobile, présentant au moins un rail de guidage (2), sur lequel est guidé de manière mobile un coulisseau de rail (3) doté d'une fonction d'entraînement pour une vitre de fenêtre (4), et un dispositif d'entraînement par câble (8) selon l'une des revendications 1 à 7.
